# EUROPEAN PATENT SPECIFICATION

(11) **EP 1 562 213 B1**
(45) Date of publication and mention of the grant of the patent: **11.04.2007**
(21) Application number: 04425068.6
(22) Date of filing: 06.02.2004
(51) Int. Cl.: H01H 83/04

(54) **Residual current-operated circuit breaker with autodiagnostic and autoreset functions**
Sich selbst prüfender und wiedereinschaltender Differenzstromschutzschalter
Disjoncteur de protection à courant différentiel résiduel avec autodiagnostic et réinitialisation automatique

(43) Date of publication of application: 10.08.2005
(73) Proprietor: GEWISS S.p.A., I-24069 Cenate Sotto (Bergamo) (IT)
(72) Inventor: Bosatelli, Domenico, 24069 Cenate Sotto Bergamo (IT)
(74) Representative: Forattini, Amelia

(56) References cited:
- DE-A- 4 432 643
- US-A- 4 538 040
- US-A- 4 568 997

## Description

The present invention relates to a residual current-operated circuit breaker with autodiagnostic and autoreset functions. More particularly, the invention relates to a residual current-operated circuit breaker that allows to diagnose automatically the correct operation of the residual current-operated circuit breaker itself and to automatically reset the residual current-operated circuit breaker at the end of the diagnostic process.

As is known, residual current-operated circuit breakers, in order to ensure their correct operation over time, i.e., in order to ensure that the device trips promptly and effectively so as to be able to open the circuit that lies upstream of a load if a fault current arrives, must be subjected periodically to field testing.

Substantially, the residual current-operated circuit breaker must be operated manually by the user in order to check that the residual current-operated circuit breaker actually opens and consequently removes the power supply of the downstream load.

This operation, which as mentioned is manual, must be repeated periodically in order to ensure perfect efficiency of the residual current-operated circuit breaker.

These periodic tests are usually not performed, first of all because the user does not remember to conduct the test and secondly because this test necessarily entails interrupting the supply of power to the downstream circuit, albeit temporarily, and this in some cases can be a drawback for the loads that are connected to that power supply.

The aim of the present invention is to provide a residual current-operated circuit breaker that has autodiagnostic and autoreset functions, i.e., is capable of automatically checking its own correct operation as regards the electrical and mechanical components.

Within this aim, an object of the present invention is to provide a residual current-operated circuit breaker that allows to test its operation automatically while keeping the loads downstream of the circuit breaker supplied with power.

Another object of the present invention is to provide a residual current-operated circuit breaker that is capable of automatically resetting itself in addition to performing automatic function testing.

Another object of the present invention is to provide a residual current-operated circuit breaker that is highly reliable, relatively simple to manufacture and at competitive costs.

This aim and these and other objects that will become better apparent hereinafter are achieved by a residual current-operated circuit breaker with autodiagnostic and autoreset functions, as defined in claim 1.

Document DE 44 32 643 discloses a device according to the preamble of claim 1.

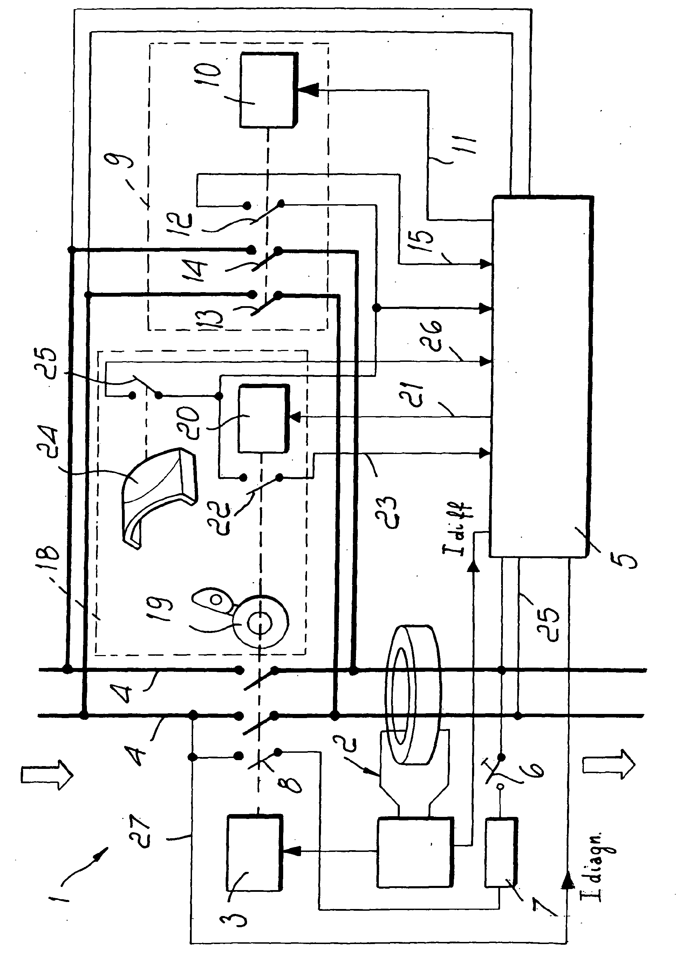

Further characteristics and advantages of the invention will become better apparent from the description of a preferred but not exclusive embodiment of the residual current-operated circuit breaker according to the present invention, illustrated by way of non-limiting example in the accompanying drawing, wherein the only figure is a block diagram of the residual current-operated circuit breaker according to the present invention.

With reference to the figure, the residual current-operated circuit breaker according to the present invention, generally designated by the reference numeral 1, includes a per se known residual-current circuit 2 that is suitable to actuate a relay 3 for releasing the contacts of a line 4 that supplies power to one or more loads arranged downstream.

The residual-current circuit is connected to a control unit 5, which is suitable to receive in input the residual current Idiff that arrives from the residual-current circuit 2.

The residual current-operated circuit breaker is furthermore provided with a pushbutton 6 for manually testing the operation of the circuit breaker; this test can also be actuated directly by the control unit 5. Manual activation of the pushbutton causes a resistor 7 arranged downstream to generate a calibrated residual current that causes the circuit breaker to open.

A similar function is provided by means of the control circuit, which can generate two separate residual current values Idiagn (nominal Idn and boosted) for automatic function diagnostics.

The residual current-operated circuit breaker according to the invention, moreover, is provided with an auxiliary section 9 that includes a contactor that allows to close the circuit, i.e., to keep the loads supplied with power even if the residual current-operated circuit breaker has tripped for test purposes.

The contactor 9 includes a secondary actuator 10 that is driven by an actuator control signal 11 that arrives from the control unit 5. The secondary actuator 10 actuates secondary contacts 13 and 14 that allow to close the electric power supply line 4, consequently bypassing the intervention of the residual current-operated circuit breaker 2, and a status indication contact 12.

Essentially, the contactor 9 is configured as a bypass of the residual current-operated circuit breaker and its operation is described in greater detail hereinafter.

Closure of the contact 12 generates a signal 15 indicating the position of the secondary contacts 13 and 14.

The control unit 5 is connected, as shown in the figure, to the power supply line 4.

The residual current-operated circuit breaker according to the invention has an additional reset section 18, which includes a control lever 19 that can be actuated by an actuator 20 that is driven by the control unit 5 by means of a control signal 21. Conveniently, the actuator 20 is of the thermomechanical type and its actuation is dependent on the verification, on the part of the control unit 5, of the position of the lever by means of a contact 22 that sends a signal 23 indicating the position of the actuation lever 19 to the control unit 5.

Moreover, actuation of the reset actuation lever 19 is dependent on the position of an interlocking means 24 conveniently constituted by a cap that when made to slide appropriately over the lever 19 prevents its manual actuation.

A contact 25 is suitable to provide a signal 26 indicating the position of the interlocking means 24 to the control unit 5.

Moreover, the control unit 5 is connected to the line 4 by means of a connection 27 in order to test the status of the system, allowing to generate in the control unit 5 the diagnostic residual current Idiagn that has the nominal value Idn or a boosted current for testing purposes.

With reference to the figure, the operation of the residual current-operated circuit breaker according to the invention is as follows.

First of all, the control unit 5, once installed, counts the time, and at a preset deadline, i.e., after a certain time has elapsed, activates the signal 11 for controlling the secondary actuator 10 so as to close the bypass circuit that allows to bypass the residual current-operated circuit breaker 2. This is meant to prevent that as a consequence of the testing of the residual current-operated circuit breaker the loads connected to the power supply line 4 are disconnected from the power supply albeit temporarily.

Before it is possible to perform this operation to close the contacts 13 and 14 by means of the secondary actuator 10, the control unit 5 checks, by means of the signal 26 that indicates the position of the interlocking means 24, whether the interlocking means 24, i.e., the cap, is in the correct position and whether the contact of the residual current-operated circuit breaker is closed.

If the contact of the residual current-operated circuit breaker is not closed or if the cap is not in the correct position, no function testing is performed.

If the contact is closed, the control signal is activated and generates the residual current by means of the connection 27. This control signal, sent by the control unit 5, substantially replaces the pressure on the testing button 6 that can be performed manually by the user.

If the residual current-operated circuit breaker 2 does not disengage, i.e., if the contacts do not open, the control unit 5 generates a current that is higher than the nominal residual current so as to force opening of the contact of the residual current-operated circuit breaker.

If the contact is found to be open, then the reset command is given by means of the control signal 21 of the thermomechanical actuator 20, which in turn acts on the actuation lever 19 in order to reconnect the residual current-operated circuit breaker.

During the open period of the residual current-operated circuit breaker, as mentioned, the secondary actuator, by means of the bypass circuit constituted by the branch from the power supply line 4 on which the circuit breakers 13 and 14 are provided, maintains the loads connected to the line constantly supplied with power, essentially bypassing the residual current-operated circuit breaker.

During this step in which the residual current-operated circuit breaker 2 is open but the line is still closed by virtue of the presence of the bypass circuit, residual-current protection is ensured by the control unit 5.

Once the residual current-operated circuit breaker 2 has reclosed, it is possible to remove control from the secondary actuator 10 so as to reopen the contacts 13 and 14 and therefore indicate that the test has had a positive outcome.

In the opposite case in which the residual current-operated circuit breaker 2 remains open despite the closure command given by the control unit 5 (indicating either a fault of the residual current-operated circuit breaker or a fault current that is present on the line), it is necessary to report the fault and maintain the actuation at the secondary actuator 10, so that there is no failure to interrupt the supply of power to the loads connected to the line, residual-current protection being always ensured by an additional circuit that is present in the control unit 5.

While testing the residual current-operated circuit breaker, an indication that is meant to indicate that the test is in progress is active.

In practice it has been found that the residual current-operated circuit breaker according to the present invention fully achieves the intended aim and objects, since it allows to perform a fully automatic test of the complete mechanical and electrical operation of the residual current-operated circuit breaker without however having to interrupt the power supply line and therefore remove power from the loads connected to the line.

The residual current-operated circuit breaker thus conceived is susceptible of numerous modifications and variations, all of which are within the scope of the appended claims.

## Claims

1. A residual current-operated circuit breaker with autodiagnostic and autoreset functions, comprising a residual-current circuit (2) that is adapted to be connected to an electric power supply line (4) in order to open said line in case of a fault current, a means for resetting the residual current-operated circuit breaker that is suitable to allow reclosure of said line following untimely opening or for diagnostics of said circuit, whereby it comprises a control unit (5) that is suitable to actuate automatic opening of said residual current-operated circuit breaker in order to check electrical and mechanical functionality and a bypass circuit (9) of said residual current-operated circuit breaker that is suitable to maintain the supply of power to loads connected to said power supply line when said residual current-operated circuit breaker is in open conditions for diagnostic purposes, **characterized in that** it comprises a secondary actuator (10) that is adapted to drive the contacts of said bypass circuit by virtue of a command from said control unit,

2. The residual current-operated circuit breaker according to claim 1, **characterized in that** said means (18) for resetting said residual current-operated circuit breaker are actuated by said control unit in order to reset said residual current-operated circuit breaker automatically.

3. The residual current-operated circuit breaker according to claim 1, **characterized in that** said control unit is connected to a circuit for generating a residual current that is similar to a pushbutton for manual testing of said residual current-operated circuit breaker.

4. The residual current-operated circuit breaker according to one or more of the preceding claims, **characterized in that** said control unit receives in input a residual-current signal of said residual-current circuit.

5. The residual current-operated circuit breaker according to one or more of the preceding claims, **characterized in that** said control unit receives in input a signal indicating the position of closure contacts of said bypass circuit.

6. The residual current-operated circuit breaker according to claim 5, **characterized in that** it comprises an interlocking means suitable to enable or not said reset means depending on its position.

7. The residual current-operated circuit breaker according to claim 6, **characterized in that** said control unit receives in input a signal indicating the position of an interlocking means.

8. The residual current-operated circuit breaker according to claim 6, **characterized in that** said reset means comprises an actuation lever.

9. The residual current-operated circuit breaker according to one or more of the preceding claims, **characterized in that** said reset means is actuated by a thermomechanical actuator that is driven by a control signal that originates from said control unit.

10. The residual current-operated circuit breaker according to one or more of the preceding claims, **characterized in that** it receives in input a signal indicating the position of the contacts of said secondary actuator.

11. A method for performing a function test on the residual current-operated circuit breaker of claim 1, **characterized in that** it comprises the steps of:
checking the status of contacts of a residual-current circuit (2) of the residual current-operated circuit breaker;
checking the position of a reset means of said residual current-operated circuit breaker;
checking the position of an interlocking means of said reset means;
closing a bypass circuit (9) that is suitable to bypass said residual current-operated circuit breaker in order to maintain the supply of power to the loads connected to the power supply line when said residual-current circuit opens;
automatically performing an opening test of said residual current-operated circuit breaker, generating nominal and boosted residual currents;
following the successfully conducted test, resetting said residual current-operated circuit breaker and opening said bypass circuit, a secondary actuator (10) being provided to drive the contacts of said bypass circuit by virtue of a command from a control unit.

## Patentansprüche

1. Fehlerstromschutzschalter mit autodiagnostischen und selbst rückstellenden Funktionen, mit einer Fehlerstromschaltung (2), die dafür eingerichtet ist, an eine elektrische Stromversorgungsleitung (4) angeschlossen zu werden, um diese Leitung im Falle eines Fehlerstroms zu öffnen, Mittel zum Rückstellen des Fehierstromschutzschalters, welche dafür geeignet ist, das erneute Schließen dieser Leitung nach unzeitgemäßer Öffnung oder zur Überprüfung dieser Schaltung zu ermöglichen, wobei er eine Steuereinheit (5) aufweist, die dafür geeignet ist, das automatische Öffnen dieses Fehlerstromschutzschalters zu bewirken, um die elektrische und mechanische Funktionalität zu überprüfen, und eine Umgebungsschaltung (9) des Fehlerstrofnschutschalters, die geeignet ist, die Energieversorgung von an die Stromversorgungsleitung angeschlossenen Lasten aufrecht zu erhalten, wenn sich der Fehlerstromschutzschalter zu diagnostischen Zwecken im offenen Zustand befindet, **dadurch gekennzeichnet, dass** er einen sekundären Stellantrieb (10) aufweist, der dafür eingerichtet ist, die Kontakte der Umgebungsschaltung mit Hilfe eines Befehls von der Steuereinheit anzutreiben.

2. Fehlerstromschutzschalter gemäß Anspruch 1, **dadurch gekennzeichnet, dass** die Vorrichtung (18) zum Rückstellen des Fehlerstromschutzschalters von der Steuereinheit gesteuert wird, um den Fehlerstromschutzschalter automatisch rückzustellen.

3. Fehlerstromschutzschalter gemäß Anspruch 1, **dadurch gekennzeichnet, dass** die Steuereinheit an eine Schaltung zum Erzeugen eines Fehlerstroms angeschlossen ist, welche ähnlich einem Druckknopf ausgebildet ist zum manuellen Testen des Fehlerstromschutzschalters.

4. Fehlerstromschutzschalter gemäß einem oder mehreren der vorherigen Ansprüche, **dadurch gekennzeichnet, dass** die Steuereinheit als Eingabe ein Fehlerstromsignal der Fehlerstromschaltung empfängt.

5. Fehlerstromschutzschalter gemäß einem oder mehreren der vorherigen Ansprüche, **dadurch gekennzeichnet, dass** die Steuereinheit als Eingabe ein Signal empfängt, das die Position von Schließkontakten der Umgebungsschaltung anzeigt.

6. Fehlerstromschutzschalter gemäß Anspruch 5, **dadurch gekennzeichnet, dass** er eine Verriegelungsvorrichtung aufweist, die dafür geeignet ist, in Abhängigkeit von ihrer Position die Rückstellvorrichtung freizugeben oder nicht.

7. Fehlerstromschutzschalter gemäß Anspruch 6, **dadurch gekennzeichnet, dass** die Steuereinheit als Eingabe ein Signal empfängt, das die Position einer Verriegelungsvorrichtung anzeigt.

8. Fehlerstromschutzschalter gemäß Anspruch 6, **dadurch gekennzeichnet, dass** die Rückstellvorrichtung einen Betätigungshebel aufweist.

9. Fehlerstromschutzschalter gemäß einem oder mehreren der vorherigen Ansprüche, **dadurch gekennzeichnet, dass** diese Rückstellvorrichtung von einem thermomechanischen Stellantrieb gesteuert ist, der von einem Steuersignal angetrieben wird, das von der Steuereinheit herstammt.

10. Fehlerstromschutzschalter gemäß einem oder mehreren der vorherigen Ansprüche, **dadurch gekennzeichnet, dass** er als Eingabe ein Signal empfängt, das die Position der Kontakte des sekundären Stellantriebs anzeigt.

11. Verfahren zur Durchführung eines Funktionstests an dem Fehlerstromschutzschalter des Anspruchs 1, **dadurch gekennzeichnet, dass** es die Schritte aufweist:
Überprüfung des Status der Kontakte einer Fehlerstromschaltung (2) des Fehlerstromschutzschalters;
Überprüfung der Position einer Rückstellvorrichtung des Fehlerstromschutzschalters;
Überprüfung der Position einer Verriegelungsvorrichtung der Rückstellvorrichtung;
Schließen einer Umgebungsschaltung (9), die geeignet ist, den Fehlerstromschutzschalter zu umgehen, um die Stromversorgung der an die Stromversorgungsleitung angeschlossenen Lasten aufrecht zu erhalten, wenn sich der Fehlerstromschutzschalter öffnet;
automatische Durchführung eines Öffnungstests des Fehlerstromschutzschalters, wobei nominale und in der Spannung erhöhte Fehlerströme erzeugt werden;
nach dem erfolgreich durchgeführten Test, Rückstellen des Fehlerstromschutzschalters und Öffnen der Umgebungsschaltung, wobei ein sekundärer Stellantrieb (10) vorgesehen ist, um die Kontakte der Umgebungsschaltung mit Hilfe eines Befehls von einer Steuereinheit anzutreiben.

## Revendications

1. Disjoncteur à courant résiduel avec des fonctions d'autodiagnostic et de réarmement automatique, comprenant un circuit de courant résiduel (2) qui est adapté pour être connecté à une ligne d'alimentation électrique (4) afin d'ouvrir ladite ligne dans le cas d'un courant de défaut, des moyens pour réarmer le disjoncteur à courant résiduel qui sont adaptés pour permettre la fermeture de nouveau de ladite ligne à la suite d'une ouverture intempestive ou pour diagnostiquer ledit circuit, dans lequel le disjoncteur comprend une unité de commande (5) qui est adaptée pour actionner une ouverture automatique dudit disjoncteur à courant résiduel afin de vérifier les fonctionnalités électrique et mécanique et un circuit de dérivation (9) dudit disjoncteur à courant résiduel qui est approprié pour maintenir l'alimentation de charges connectées à ladite ligne d'alimentation lorsque ledit disjoncteur à courant résiduel est dans des conditions d'ouverture à des fins de diagnostic, **caractérisé en ce qu'**il comprend un actionneur secondaire (10) qui est adapté pour entraîner les contacts dudit circuit de dérivation du fait d'une commande provenant de ladite unité de commande.

2. Disjoncteur à courant résiduel selon la revendication 1, **caractérisé en ce que** lesdits moyens (18) pour réarmer ledit disjoncteur à courant résiduel sont actionnés par ladite unité de commande afin de réarmer ledit disjoncteur à courant résiduel automatiquement.

3. Disjoncteur à courant résiduel selon la revendication 1, **caractérisé en ce que** ladite unité de commande est connectée à un circuit pour générer un courant résiduel qui est similaire à un bouton-poussoir pour tester manuellement ledit disjoncteur à courant résiduel.

4. Disjoncteur à courant résiduel selon une ou plusieurs des revendications précédentes, **caractérisé en ce que** ladite unité de commande reçoit en entrée un signal de courant résiduel dudit circuit de courant résiduel.

5. Disjoncteur à courant résiduel selon une ou plusieurs des revendications précédentes, **caractérisé en ce que** ladite unité de commande reçoit en entrée un signal indiquant la position des contacts de fermeture dudit circuit de dérivation.

6. Disjoncteur à courant résiduel selon la revendication 5, **caractérisé en ce qu'**il comprend des moyens de verrouillage adaptés pour activer ou non lesdits moyens de réarmement en fonction de leur position.

7. Disjoncteur à courant résiduel selon la revendication 6, **caractérisé en ce que** ladite unité de commande reçoit en entrée un signal indiquant la position de moyens de verrouillage.

8. Disjoncteur à courant résiduel selon la revendication 6, **caractérisé en ce que** lesdits moyens de réarmement comprennent un levier d'actionnement.

9. Disjoncteur à courant résiduel selon une ou plusieurs des revendications précédentes, **caractérisé en ce que** lesdits moyens de réarmement sont actionnés par un actionneur thermomécanique qui est entraîné par un signal de commande qui provient de ladite unité de commande.

10. Disjoncteur à courant résiduel selon une ou plusieurs des revendications précédentes, **caractérisé en ce qu'**il reçoit en entrée un signal indiquant la position des contacts dudit actionneur secondaire.

11. Procédé d'exécution d'un test de fonctionnement sur le disjoncteur à courant résiduel de la revendication 1, **caractérisé en ce qu'**il comprend les étapes consistant à :
vérifier l'état des contacts d'un circuit de courant résiduel (2) du disjoncteur à courant résiduel ;
vérifier la position de moyens de réarmement dudit disjoncteur à courant résiduel ;
vérifier la position de moyens de verrouillage desdits moyens de réarmement ;
fermer un circuit de dérivation (9) qui est adapté pour shunter ledit disjoncteur à courant résiduel afin de maintenir l'alimentation des charges connectées à la ligne d'alimentation lorsque ledit circuit de courant résiduel s'ouvre ;
effectuer automatiquement un test d'ouverture dudit disjoncteur à courant résiduel, générant des courants résiduels nominaux et augmentés;
à la suite du test effectué avec succès, réarmer ledit disjoncteur à courant résiduel et ouvrir ledit circuit de dérivation, un actionneur secondaire (10) étant prévu pour entraîner les contacts dudit circuit de dérivation du fait d'une commande provenant d'une unité de commande.
